# EUROPÄISCHE PATENTANMELDUNG

(11) **EP 1 950 870 A2**
(43) Veröffentlichungstag der Anmeldung: **30.07.2008**
(21) Anmeldenummer: 08001303.0
(22) Anmeldetag: 24.01.2008
(51) Int. Cl.: H02K 11/04

(54) **Elektromotorsystem und Baukasten hierfür**

(30) Priorität: 29.01.2007 DE 102007005330
(71) Anmelder: Schunk GmbH & Co. KG Spann- und Greiftechnik, 74348 Lauffen am Neckar (DE)
(72) Erfinder: Fellhauer, Bruno, 74336 Brackenhelm (DE); Quaas, Matthias, 74232 Abstatt / Happenbach (DE); Grewe, Jan, 74336 Brackenheim (DE)
(74) Vertreter: Bulling, Alexander

(57) **Zusammenfassung**

Die Erfindung betrifft ein Elektromotorsystem (10) mit mehreren Modulen (10,12,16), wobei wenigstens ein Motormodul (14) mit einem eine Motorwelle (26) antreibenden Elektromotor (24) und ein Elektronikmodul (18) mit einer Elektronik zur Ansteuerung des Elektromotors vorgesehen ist, wobei zwischen dem Elektronikmodul (18) und dem Motormodul (14) und/oder auf der dem Elektronikmodul (18) abgewandten Seite des Motormoduls (14) am Motormodul (14) wenigstens ein Funktionsmodul (16) anordenbar ist, wobei das Motormodul (14) und, falls vorgesehen, das wenigstens eine Funktionsmodul (16) jeweils eine Modulkennung aufweisen und wobei die Elektronik des Elektronikmoduls (18) derart ausgebildet ist, dass sie die jeweiligen Modulkennungen zur Selbstkonfiguration des Systems ausliest.

Die Erfindung betrifft außerdem ein Baukastensystem für derartige Elektromotorsysteme.

## Beschreibung

Die Erfindung betrifft ein Elektromotorsystem und einen zugehörigen Baukasten. Elektromotorsysteme sind aus dem Stand der Technik in vielfältiger Art und Weise bekannt.

Je nach an das Elektromotorsystem zu stellende Anforderungen finden unterschiedliche Komponenten, wie verschiedene Motoren, verschiedene Getriebeeinheiten, verschiedene Sensoren, verschiedene Motorflansche et cetera Verwendung, die entsprechend ausgewählt und individuell zusammengestellt werden. Die einzelnen Komponenten sind dabei aufeinander abzustimmen, insbesondere auch eine den Motor ansteuernde Elektronik. Da nur von entsprechend ausgebildeten und geschulten Personen ein Zusammenstellen und Abstimmen der Komponenten gemacht werden kann, ist hierfür ein nicht unerheblicher Aufwand verbunden.

Der Erfindung liegt die Aufgabe zugrunde, ein Elektromotorensystem bereitzustellen, das auf einfache Art und Weise montierbar und auch demontierbar ist. Insbesondere nicht speziell geschulte Personen sollen dabei in die Lage versetzt werden, Elektromotorensysteme je nach Anforderungsprofil bereitstellen zu können.

Diese Aufgabe wird durch ein Elektromotorsystem mit den Merkmalen des Anspruchs 1 gelöst. Ein solches System weist mehrere Module auf, wobei wenigstens ein Motormodul mit einem eine Motorwelle antreibbaren Elektromotor und ein Elektronikmodul mit einer Elektronik zur Ansteuerung des Elektromotors vorgesehen ist. Dabei sind das Motormodul und das Elektronikmodul so ausgebildet, dass zwischen ihnen wenigstens ein Funktionsmodul anordenbar ist. Das Motormodul kann zudem so ausgebildet sein, dass auf der dem Elektronikmodul abgewandten Seite des Motormoduls am Motormodul ebenfalls ein Funktionsmodul angeordnet werden kann. Das Motormodul und, falls vorgesehen, das wenigstens eine Funktionsmodul weist dabei jeweils eine Modulkennung auf, wobei die Elektronik des Elektronikmoduls derart ausgebildet ist, dass sie die jeweiligen Modulkennungen zur Selbstkonfiguration des Systems ausliest. Ein solches System hat folglich den Vorteil, dass vom Elektronikmodul beziehungsweise dessen Elektronik zur Selbstkonfiguration des Systems erkannt wird, welche Module das Elektromotorsystem im endmontierten Zustand aufweist. Die Ansteuerung des Elektromotors durch die Elektronik des Elektronikmoduls wird also unter Berücksichtigung der verwendeten Module entsprechend abgestimmt. Wird beispielsweise ein Motormodul mit einem Motor, der eine hohe Leistung aufweist, erkannt, kann die Ansteuerung des Motors aufgrund einer für ihn geeigneten Stromversorgung erfolgen. Sind zudem Funktionsmodule vorhanden, so kann die aus dem jeweiligen Funktionsmodul resultierende Funktion und/oder die im jeweiligen Funktionsmodul generierten Signale dem Elektronikmodul zur Verfügung gestellt werden. Das Elektronikmodul kann dann, in Abhängigkeit von der Funktion des jeweiligen Funktionsmoduls, beziehungsweise dessen generierter Signale, den Motor in optimaler Weise ansteuern. Aufgrund der Selbstkonfiguration des Systems können auch fachlich nicht geschulte Personen die einzelnen Module zusammenbauen, ohne dass eine manuelle Anpassung der Steuerung der Elektronik an den zu verwendenden Motor und/oder die zu verwendeten Funktionsmodule erforderlich ist.

Besonders vorteilhaft ist, wenn die Modulkennung in dem jeweiligen Modul elektronisch hinterlegt ist und wenn die Modulkennungen über in dem jeweiligen Modul vorgesehene elektrische Leitungen oder kontaktlos über eine Funkerkennung von der Elektronik des Elektronikmoduls ausgelesen werden. Als Funkerkennung kann dabei beispielsweise ein RFID Verwendung finden.

Die Elektronik des Elektronikmoduls kann dabei so ausgebildet sein, dass das Auslesen der Modulkennungen bei der Montage oder mit der ersten Inbetriebnahme des Systems erfolgt. Das Auslesen der Modulkennungen hat prinzipiell lediglich einmal zu erfolgen; die erkannten Module können dann in der Elektronik hinterlegt werden. Andererseits kann vorgesehen sein, dass das Auslesen der Modulkennungen nach vorgegebenen Zeitständen wiederholt erfolgt. Hierdurch kann sichergestellt werden, dass keine Module ausgetauscht, entfernt oder hinzugefügt wurden.

Als Funktionsmodul kann insbesondere ein Lagegebermodul zur Drehlagenmessung der Motorwelle, ein Bremsmodul zum Abbremsen der Motorwelle, ein Drehmomentenmodul zur Drehmomentmessung der Motorwelle, ein Getriebemodul zur Wandlung der Drehzahl/des Drehmoments der Motorwelle und/oder ein Endmodul mit/oder ohne einem die Abtriebswelle des Systems bildenden Wellenabschnitt vorgesehen sein. Bei den Funktionsmodulen kann unterschieden werden zwischen Modulen, die mit der Motorwelle drehgekoppelte Wellenabschnitte vorsehen (wie das Lagegebermodul, das Bremsmodul, das Drehmomentenmodul oder das Getriebemodul) und Modulen, die nicht mit der Motorwelle mechanisch gekoppelte Wellenabschnitte aufweisen (wie beispielsweise ein Zusatzelektronikmodul oder ein auf der dem Motormodul abgewandten Seite des Elektronikmoduls anzuordnendes Endmodul). Je nach Anforderungsprofil an das System finden neben dem Motormodul und dem Elektronikmodul kein oder mehrere Funktionsmodule Verwendung.

Ferner ist vorteilhaft, wenn das Motormodul, das Elektronikmodul und/oder das, falls vorhanden, wenigstens eine Funktionsmodul an den aneinander zugewandten Stirnseiten komplementär zueinander ausgebildete Anordnungsabschnitte derart aufweist, dass die einzelnen Module entlang der Motorachse in Reihe hintereinander anordenbar sind. Im endmontierten Zustand kann das System dann an einer Endseite die Abtriebswelle des Systems aufweisen, die entweder von der Motorwelle, von einem Wellenabschnitt eines Getriebemoduls und/oder von dem Wellenabschnitt eines getriebelosen Endmoduls gebildet sein kann. Die dem Motor abgewandte Endseite kann dabei beispielsweise von einem Endmodul ohne Wellenabschnitt, wie insbesondere einem Deckel oder Flanschmodul, gebildet sein.

Gemäß der Erfindung ist auch denkbar, dass Module, die nicht mit der Motorwelle mechanisch gekoppelt sind, wie beispielsweise das Elektronikmodul, parallel zur Motorachse neben dem Motormodul und/oder, falls vorhanden, den mit der Motorwelle mechanisch gekoppelten Funktionsmodulen anordenbar sind. Die Module können dabei beispielsweise über ein gemeinsames, übereinander angeordnete Anordnungsabschnitte aufweisendes, Endmodul aneinander angeordnet sein, wobei über das gemeinsame Endmodul eine elektrische Verbindung zwischen den Modulen erfolgen kann.

Insgesamt ist vorteilhaft, wenn das Motormodul, das Elektronikmodul und/oder, falls vorhanden, das wenigstens eine Funktionsmodul, Kontaktierungsmittel zur elektrischen Kontaktierung des jeweils benachbarten Moduls aufweisen. Die Kontaktierungsmittel können dabei insbesondere steckerartig ausgebildet sein, so dass bei aneinander montierten Modulen die jeweiligen Kontaktierungsmittel im gegenseitigen Eingriff sind.

Ferner ist vorteilhaft, wenn ein sich an das Elektronikmodul anschließendes Funktionsmodul und/oder das Motormodul Durch- und/oder Weiterleitungsmittel zur Durch- und Weiterleitung von Modulkennungen, von elektrischen Regel- und/oder Überwachungssignalen und/oder von Versorgungsstrom aufweisen. Hierdurch kann gewährleistet werden, dass eine Durch- und/oder Weiterleitung von elektrischen Signalen, Modulkennungen und/oder Versorgungsstrom innerhalb den jeweiligen Modulen erfolgt.

Die Durch- und/oder Weiterleitungsmittel können dabei als sich in Längsrichtung des jeweiligen Moduls erstreckende Leiterplatinen ausgebildet sein, die als Kontaktierungsmittel einerends einen Steckerabschnitt und andererends Kontaktstellen zum Einstecken in den Steckerabschnitt der Leiterplatine des jeweils benachbarten Moduls aufweisen. Die Leiterplatinen können dabei nicht nur zur Durchleitung von Signalen durch das jeweilige Modul dienen, sondern auch im jeweiligen Modul generierte Signale verarbeiten beziehungsweise von der Elektronik des Elektronikmoduls kommende Signale entsprechend verarbeiten. Zudem kann die jeweilige Modulkennung auf der entsprechenden Leiterplatine hinterlegt sein.

Beim erfindungsgemäßen System ist ferner vorteilhaft, wenn das Motormodul, das Elektronikmodul und/oder, falls vorhanden, das wenigstens eine Funktionsmodul jeweils ein Modulgehäuse aufweisen, das aus einem Hohlprofil gebildet ist. Die Modulgehäuse haben dabei vorteilhafterweise wenigstens weitgehend identische Außen- beziehungsweise Innenkonturen. Die Modulgehäuse können dabei in Längsrichtung unterschiedlich lang ausgebildet sein, je nach Größe des bereitzustellenden Bauraums. Die Hohlprofile sind vorteilhafterweise Strangpressprofile.

Eine weitere Ausführungsform der Erfindung sieht vor, dass die Motorwelle im Motormodul nur mit einem Lager drehbar gelagert angeordnet ist, wobei an der dem Lager abgewandten Stirnseite des Motormoduls dann ein Funktionsmodul vorgesehen ist, welches einen mit der Motorwelle drehgekoppelten, im Funktionsmodul mittels eines Lagers drehbar gelagerten Wellenabschnitt derart aufweist, dass die Motorwelle und der Wellenabschnitt von dem einen motormodulseitigen Lager und dem funktionsmodulseitigen Lager drehbar gelagert wird. Hierdurch wird erreicht, dass das Motormodul lediglich mit einer Lagerstelle auskommt, wobei im endmontierten Zustand aufgrund des Lagers des sich an das Motormodul anschließenden Funktionsmoduls eine definierte Lagerung der Motorwelle erreicht wird. Durch Vorsehen von lediglich einer Lagerstelle im Motormodul kann dieses vergleichsweise klein bauen. Zudem wird Material- und Fertigungsaufwand reduziert. Bei Vorsehen von Funktionsmodulen, die einen mit der Drehbewegung der Motorwelle mechanisch gekoppelten Wellenabschnitt aufweisen, können diese Funktionsmodule ebenfalls lediglich ein Lager zur Lagerung des jeweiligen Wellenabschnitts im Funktionsmodul vorsehen. Hierdurch wird erreicht, dass auch die Funktionsmodule aufgrund der lediglich einen Lagerstelle vergleichsweise wenig Bauraum benötigen.

Die eingangs genannte Aufgabe wird auch gelöst durch einen Baukasten für erfindungsgemäße Elektromotorensysteme. Ein derartiger Baukasten umfasst Motormodule mit unterschiedlichen Leistungen aufweisenden Motoren, Elektronikmodule und Funktionsmodule mit verschiedenartigen Kennziffer, wobei je nach Anforderungsprofil die einzelnen Module in unterschiedlicher Anzahl zu einem erfindungsgemäßen Elektromotorsystem zusammenbaubar sind. Ein derartiges System hat dann den Vorteil, dass es selbstkonfigurierend ist, da das Elektronikmodul die Modulkennungen der einzelnen Module ausliest.

Weitere Einzelheiten und vorteilhafte Ausgestaltungen der Erfindung sind der nachfolgenden Beschreibung zu entnehmen, anhand derer die in den Figuren dargestellten Ausführungsbeispiele der Erfindung näher beschrieben und erläutert sind.

Es zeigen:
- Figur 1: eine Explosionsdarstellung eines ersten erfindungsgemäßen Elektromotorsystems;
- Figur 2: einen vertikalen Querschnitt durch das in Figur 1 dargestellte endmontierte System;
- Figur 3: einen horizontalen Längsschnitt durch das System gemäß Figur 2;
- Figur 4: eine Explosionsdarstellung einer zweiten Ausführungsform;
- Figur 5: einen vertikalen Längsschnitt durch das System gemäß Figur 4 im montierten Zustand;
- Figur 6: einen horizontalen Längsschnitt durch das System gemäß Figur 4 im montierten Zustand;
- Figur 7: eine Explosionsdarstellung eines dritten erfindungsgemäßen Systems; und
- Figur 8: einen vertikalen Längsschnitt durch das System gemäß Figur 7.

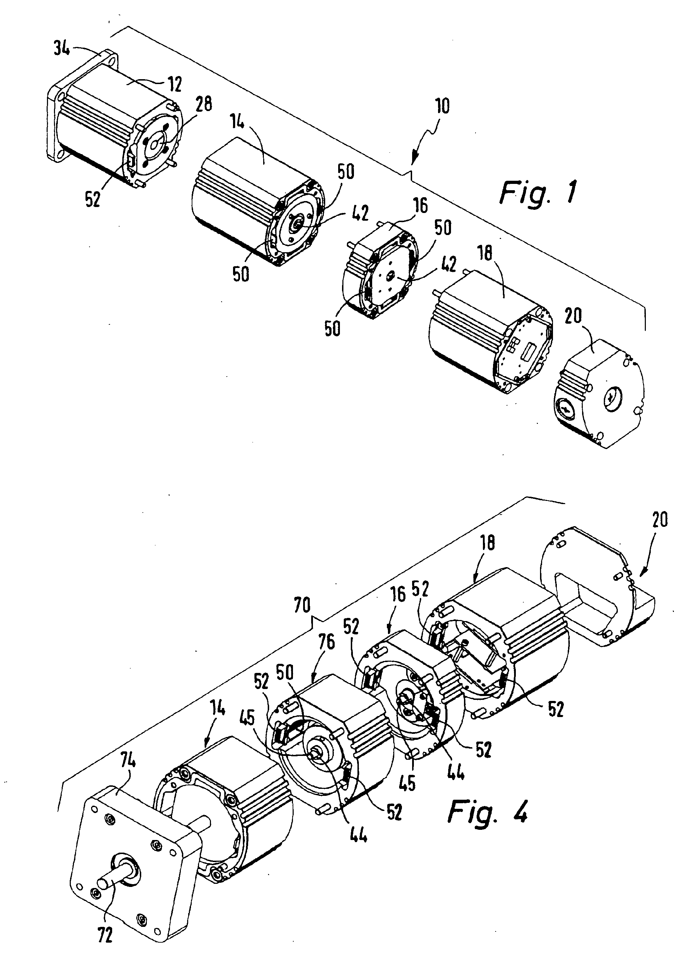

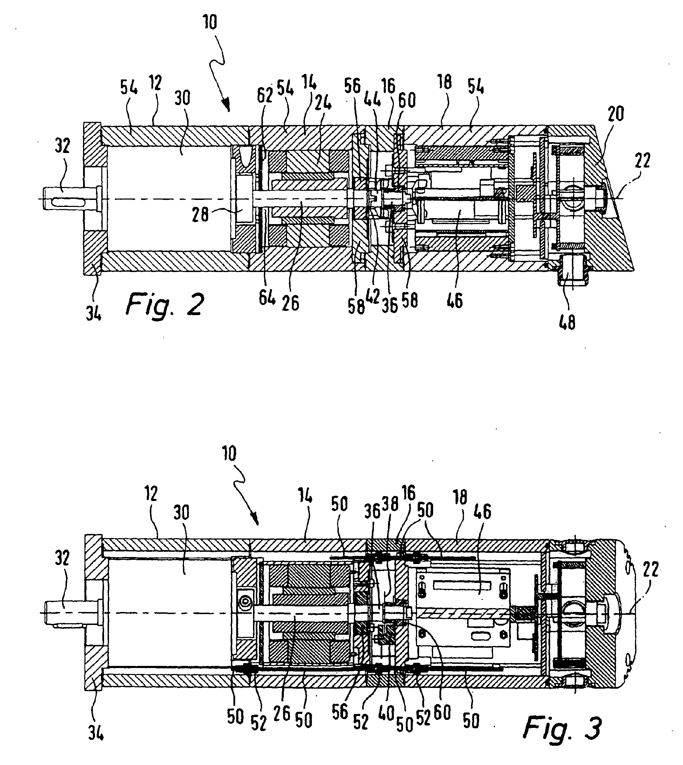

In den Figuren 1 bis 3 ist ein erstes Elektromotorensystem 10 gezeigt. Das Elektromotorensystem 10 besteht dabei aus einem Getriebemodul 12, einem Motormodul 14, einem Lagegebermodul 16, einem Elektronikmodul 18 und einem Endmodul 20. Im montierten Zustand, der in den Figuren 2 und 3 gezeigt ist, sind sämtliche Module entlang der Mittellängsachse 22 des Systems 10 in Reihe hintereinander angeordnet. Die dargestellten Module sowie gegebenenfalls weitere vorzusehende Module, wie insbesondere Bremsmodule oder Drehmomentenmodule, sind Bestandteile eines Baukastensystems, das verschiedene Module mit verschiedenen Kenngrößen umfasst. Je nach an das System zu stellendem Anforderungsprofil können verschiedene Module entsprechend ausgewählt werden und zu einem geeigneten System montiert werden.

Wie aus den Schnitten gemäß Figur 2 und 3 deutlich wird, umfasst das Motormodul 14 einen Elektromotor 24, der eine Motorwelle 26 aufweist. Die Motorwelle 26 ist auf ihrer dem Getriebemodul 12 zugewandten Seite mit einem Eingangswellenabschnitt 28 eines im Getriebemodul 12 vorgesehenen Getriebes 30 drehgekoppelt. Auf der dem Motormodul 14 abgewandten Seite weist das Getriebemodul 12 einen Abtriebswellenabschnitt 32 auf, der mit der mit dem System 10 anzutreibenden Einheit drehkoppelbar ist. Das Getriebemodul 12 umfasst ferner einen Flanschabschnitt 34 zur Befestigung des Systems 12 an einem entsprechenden Bauteil.

Auf der dem Getriebemodul 12 abgewandten Seite ist die Motorwelle 26 mit einem Wellenabschnitt 36 des Lagegebermoduls 16 drehgekoppelt. Der Wellenabschnitt 36 umfasst einen eine Drehlagencodierung aufweisenden Rotor 38, der von einer lagegebermodulseitigen Abtasteinheit 40, die in Figur 3 deutlich zu erkennen ist, zur Drehlagenbestimmung des Wellenabschnitts 36 beziehungsweise der Motorwelle 26 vorgesehen ist.

Die freien Enden der Motorwelle 26 beziehungsweise der Wellenabschnitte 36 der mit der Motorwelle 26 drehzukoppelnden Module sind derart ausgebildet, dass sie in axialer Richtung miteinander fügbar sind. Wie aus insbesondere Figur 2 deutlich wird, weist das dem Lagegebermodul 16 zugewandte freie Ende der Motorwelle 26 an seiner Stirnseite einen quer zur Längsachse verlaufenden Steg 42 auf, der in eine dazu komplementär ausgebildete, an der dem Motormodul 14 zugewandten Stirnseite des Wellenabschnitts 36 des Lagegebermoduls 14 vorgesehene Quernut 44 eingreift. Zur gegenseitigen Zentrierung weist die dem Wellenabschnitt 36 zugewandte Stirnseite der Motorwelle 26 eine in der Mittellängsachse 22 liegende, rotationssymmetrisch ausgebildete, insbesondere konisch verlaufende, Zentrieraussparung auf, in die eine an der Stirnseite des Wellenabschnitts 36 vorgesehene, rotationssymmetrisch zur Mittellängsachse 22 verlaufende Zentriernase eingreift. In der Figur 4 sind solche Zentriernasen mit dem Bezugszeichen 45 gekennzeichnet.

An das Lagegebermodul 16 schließt sich das Elektronikmodul 18 an, das eine Elektronik 46 zur Ansteuerung des Elektromotors 24 und zur Auswertung der vom Lagegebermodul 16, beziehungsweise dessen Abtasteinrichtung 40 generierten Signale, aufweist. Die dem Lagegebermodul 16 abgewandte Seite des Elektronikmoduls 18 ist mit dem deckelartig ausgebildeten Endmodul 20 verschlossen, wobei am Endmodul 20 Anschlussausgänge 48 für Verbindungskabel von einer Stromversorgung beziehungsweise einer übergeordneten Regel- oder Steuereinheit zum Elektronikmodul 18 vorgesehen sind.

Die einzelnen Module 12, 14, 16 und 18 weisen bei der Montage der Module miteinander versteckbare Leiterplatinen 50 auf, die insbesondere in Figur 3 deutlich zu erkennen sind. Jeweils ein Modul sieht wenigstens eine Leiterplatte 50 mit einem zugehörigen Steckerabschnitt 52 vor. Bei der Montage der einzelnen Module erfolgt folglich eine elektrische Kontaktierung der jeweils benachbarten Leiterplatten 50. Auf den Leiterplatten 50 sind jeweils Modulkennungen des jeweiligen Moduls vorgesehen. Die Modulkennungen umfassen dabei die dem jeweiligen Modul zugrundeliegenden, spezifischen Größen. Aufgrund der Kontaktierung der einzelnen Leiterplatten 50 kann die Elektronik 46 der Elektronikeinheit 18 bei oder nach der Montage, beispielsweise beim erstmaligen Inbetriebnehmen des Systems, die Modulkennungen der einzelnen Module auslesen und auf Basis der ausgelesenen Modulkennungen das Elektromotorsystem konfigurieren.

Über die miteinander in Kontakt stehenden Leiterplatten 50 werden neben der Weiterleitung der jeweiligen Modulkennung an die Elektronikeinheit auch Regel-, Steuer- und/oder Überwachungssignale von den einzelnen Modulen, beziehungsweise deren Systeme, zur Elektronik 46 des Elektronikmoduls 18 übertragen. Ferner werden Regel- oder Steuersignale zur Regelung und Ansteuerung des Elektromotors 24 über die jeweils miteinander in elektrischem Kontakt stehenden Leiterplatinen 50 übertragen. Über die Leiterplatinen 50 kann zudem der Elektromotor und/oder weitere Einheiten, wie beispielsweise die Abtasteinheit 40 des Moduls 16, mit Strom versorgt werden.

Die einzelnen Module 12, 14, 16, 18, 20 umfassen jeweils ein Modulgehäuse 54, das aus einem Hohlprofil gebildet ist. Je nach im jeweiligen Modul vorzusehenden Funktionseinheit kann das jeweilige Modulgehäuse 54 auf dessen Innenseite unterschiedlich ausgebildet sein. Beim Endmodul 20 ist zudem die eine Stirnseite verschlossen ausgebildet.

Wie aus insbesondere Figur 2 und 3 deutlich wird, ist die Motorwelle 26 im Motormodul 14 auf der dem Getriebemodul 12 abgewandten Seite mit nur einem Lager 56 drehbar gelagert. Das motormodulseitige Lager 56 ist dabei an einem innerhalb des Modulgehäuses 54 des Motormoduls 14 fest angeordneten Lagerschild 58 befestigt. Um dennoch im Betrieb des Systems 10 eine definierte Lagerung der Motorwelle 26 gewährleisten zu können, ist der getriebeseitige, mit der Motorwelle 26 drehgekoppelte Wellenabschnitt 28 innerhalb des Getriebemoduls mit wenigstens einem Lager drehbar gelagert. Die Motorwelle 26 wird folglich im Betrieb des Systems zum einen von dem motormodulseitigen, direkt an der Motorwelle 26, angeordneten Lager 56 und zum anderen über das getriebemodulseitige, in den Figuren nicht näher dargestellte, Lager drehbar gelagert. Hierdurch wird erreicht, dass das Elektromotormodul 14 in Längsrichtung vergleichsweise kurz bauen kann, da Bauraum für ein zweites elektromodulseitiges Lager nicht zur Verfügung gestellt werden muss.

Entsprechend dem Motormodul 14 weist das Lagegebermodul 16 ebenfalls nur ein Lager 60 auf, das den Wellenabschnitt 36 innerhalb dem Lagegebermodul 16 drehbar lagert. Aufgrund der Kopplung des Wellenabschnitts 36 mit der Motorwelle 26 kann eine zweite Lagerstelle innerhalb dem Lagegebermodul entfallen. Das Lager 60 ist dabei, entsprechend dem Lager 56, an einem lagegebermodulseitigen Lagerschild 58 angeordnet.

Um im nicht verbauten Zustand des Motormoduls 14 einen Berührkontakt zwischen der motorwellenseitigen Wicklung des Elektromotors 24 und dem gehäuseseitigen Stator des Elektromotors 24 zu unterbinden, ist im Motormodul 14 ein Zentrierelement zur wenigstens weitgehend zur Mittellängsachse 22 des Motormoduls 12 achsparallelen Ausrichtung der Motorwelle 26 in Form einer Lochplatte 62 vorgesehen. Die Lochplatte 62, die senkrecht zur Mittellängsachse 22 angeordnet ist, weist eine zentrale Aussparung 64 auf, die die Motorwelle 26 durchgreift. Der Durchmesser der Aussparung 22 ist geringfügig größer ist als der Außendurchmesser der Motorwelle 26. Hierdurch wird eine Zentrierung der Motorwelle 26 erreicht und ein zu Beschädigungen führendes magnetisches Anhaften der motorwellenseitigen Wicklung am Stator des Elektromotors 24 wird unterbunden. Zudem wird hierdurch eine Montageerleichterung beim Montieren der einzelnen Module in axialer Richtung erreicht.

Die Lochplatte 62 kann insbesondere auch als Leiterplatine ausgebildet sein, auf der eine Motorsensorik, oder Bauteile hiervon, angeordnet sein können.

Das in den Figuren 4 bis 6 dargestellte zweite erfindungsgemäße Elektromotorsystem 70 weist dem in den Figuren 1 bis 3 dargestellten System 10 entsprechend ein Motormodul 14, ein Lagegebermodul 16 und ein Elektronikmodul 18 auf, wobei entsprechende Bauteile mit entsprechenden Bezugszahlen versehen sind. Anders als das System 10 umfasst das System 70 kein Getriebemodul, sondern eine Abtriebswelle 72 umfassendes Endmodul 74. Ferner ist ein zusätzliches Funktionsmodul zwischen dem Motormodul 14 und dem Lagegebermodul 16 in Form eines Bremsmoduls 76 vorgesehen. Das Motormodul 14 des Systems 70 entspricht im Wesentlichen dem Aufbau dem Motormodul 14 des Systems 10, wobei das Motormodul 14 des Systems 70 kleiner ausgelegt ist und damit andere Kennzahlen aufweist.

Die Motorwelle 26 ist beim System 70, wie beim System 10, mit lediglich einem Lager 56 im Motorenmodul 14 gelagert. Das dem Lager 56 abgewandte freie Ende der Motorwelle 26 ist mit dem die Abtriebswelle 72 bildenden Wellenabschnitt 78 des Endmoduls 74 drehbar gekoppelt, wobei der Wellenabschnitt 78 über ein Lager 80 am Endmodul 74 drehbar gelagert ist. Insofern wird eine definierte Lagerung der Motorwelle 26 über das unmittelbar an der Motorwelle 26 angeordnete Lager 56 und über das mittelbar die Motorwelle 26 lagernde Lager 80 gewährleistet.

Das Bremsmodul 76 weist eine elektromagnetische Bremseinheit 82 auf, mit der ein über lediglich ein Lager 84 im Bremsmodul 76 drehbar gelagerter Wellenabschnitt 86 abbremsbar ist. Da der Wellenabschnitt 86 mit der Motorwelle 26, und damit auch dem Wellenabschnitt 86 beziehungsweise der Abtriebswelle 72, drehbar gekoppelt ist, kann über die Bremseinheit 82 die Motorwelle 26 beziehungsweise die Abtriebswelle 72 abgebremst werden.

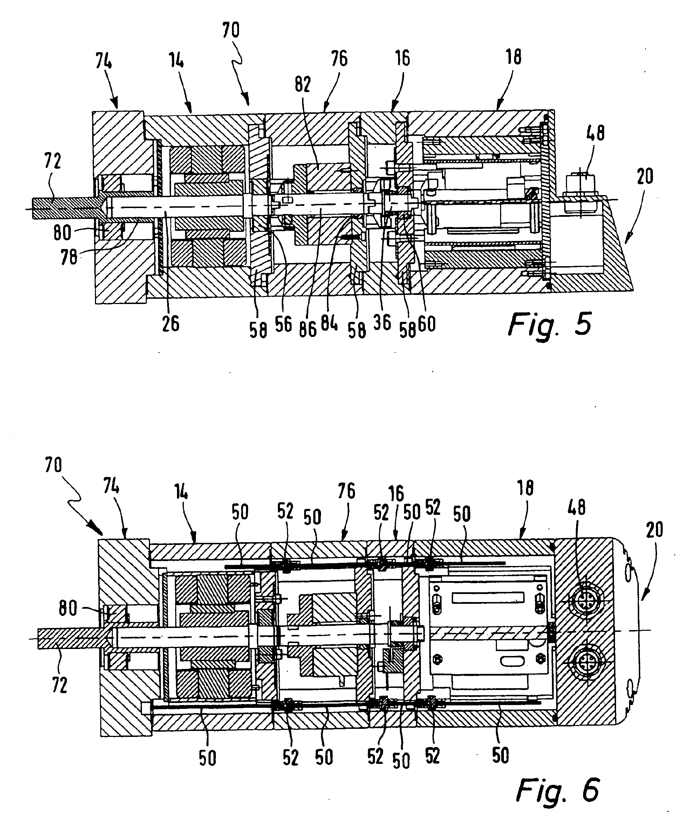

Wie aus Figur 6 deutlich wird, sind, entsprechend dem System 10, die einzelnen Module über Leiterplatinen 50 miteinander elektrisch verbunden. Hierdurch kann über die Elektronik 46 des Elektronikmoduls 18 eine Selbstkonfiguration des Systems 70 erreicht werden; die Elektronik 46 kann auslesen, welche Module das System bilden und welche Module wie und in Abhängigkeit von welchen anderen Modulen angesteuert werden müssen.

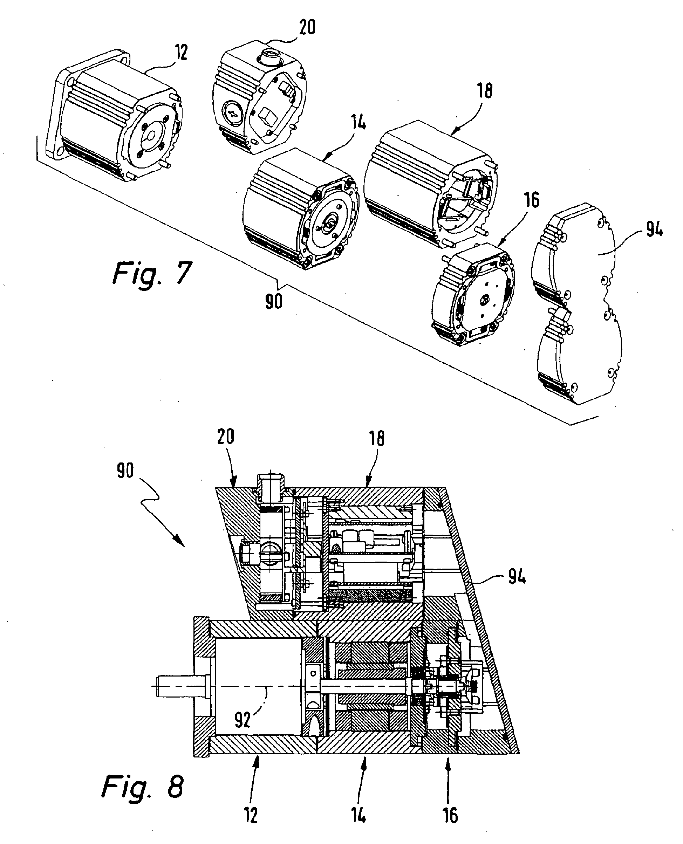

Das dritte erfindungsgemäße, in den Figuren 7 und 8 gezeigte, Elektromotorensystem 90 umfasst die gleichen Einzelmodule wie das System 10 gemäß Figuren 1 bis 3. Allerdings sind hierbei lediglich die mit der Motorwelle 26 eine Drehkopplung aufweisenden Module, nämlich das Motormodul 12 und das Lagegebermodul 16, entlang der Motorwellenachse 92 angeordnet. Die nicht mit der Motorwelle mechanisch gekoppelte Bauteile aufweisenden Module, nämlich das Elektronikmodul 18 und das Endmodul 20, sind hierbei hintereinander, aber parallel zur Motorwellenachse 92, angeordnet. Hierfür ist ein deckelartiges Adaptermodul 94 vorgesehen, an dem zum einen die dem Endmodul 20 abgewandte Seite des Elektronikmoduls 18 und zum anderen die dem Motormodul 14 abgewandte Seite des Lagegebermoduls 16 angeordnet ist. Innerhalb des Verbindungsmoduls 94 können nicht dargestellte elektrische Leitungen vorgesehen sein, die die Elektronik 46 des Elektronikmoduls 18 mit der im Schnitt gemäß Figur 8 nicht zu sehenden Leiterplatten des Lagegebermoduls 16 elektrisch verbinden. Dazu können im Verbindungsmodul 94 entsprechende Steckverbinder 52 vorgesehen sein, die zum einen die lagegebermodulseitigen Platinen 50 und zum anderen die elektronikmodulseitigen Platinen 50 kontaktieren.

Wie bereits erwähnt, sind die Module der Systeme 10, 70 und 90 einem Baukasten entnommen und werden je nach Anforderungsprofil der Elektromotorsysteme entsprechend beliebig zusammengesetzt. Neben den in den Figuren 1 bis 8 beschriebenen Module können noch weitere Module vorgesehen sein, wie beispielsweise Drehmomentenmodule zur Messung des Drehmoments der Motorwelle. Die einzelnen Funktionsmodule können in verschiedenen Ausführungen mit verschiedenen Kennziffern vorliegen. Beispielsweise sind Motormodule mit verschieden starken Motoren vorgesehen und Getriebemodule mit verschiedenen Unter- oder Übersetzungsgetrieben. Die einzelnen Module können aufgrund der jeweiligen Modulkennung von der Elektronik des Elektronikmoduls erkannt werden, wodurch eine Selbstkonfiguration des Systems gewährleistet werden kann. Die Module weisen dabei an den einander zugewandten Stirnseiten jeweils komplementär ausgebildete Anordnungsabschnitte derart auf, dass die einzelnen Module entlang der Mittellängsachse beziehungsweise der Motorachse hintereinander angeordnet werden können. So kann beispielsweise bei dem System 10 zwischen dem Lagegebermodul 16 und dem Elektronikmodul 18 zusätzlich ein Bremsmodul 76 vorgesehen sein. Entsprechend kann beispielsweise bei dem System 70 zwischen dem Endmodul 74 und dem Motormodul 14 ein geeignetes Getriebemodul 12 vorgesehen sein. Ferner ist denkbar, dass aus dem vorhandenen Baukasten lediglich ein Elektronikmodul 18, ein Motormodul 14, ein Endmodul 74 sowie ein Endmodul 20 entnommen wird, um ein vergleichsweise kleines und kompakt bauendes System bereitzustellen.

## Patentansprüche

1. Elektromotorsystem (10, 70, 90) mit mehreren Modulen (12, 14, 16, 18, 20, 74, 76, 94), wobei wenigstens ein Motormodul (14) mit einem eine Motorwelle (26) antreibenden Elektromotor (24) und ein Elektronikmodul (18) mit einer Elektronik (46) zur Ansteuerung des Elektromotors (24) vorgesehen ist, wobei zwischen dem Elektronikmodul (18) und dem Motormodul (14) und/oder auf der dem Elektronikmodul (18) abgewandten Seite des Motormoduls (14) wenigstens ein Funktionsmodul (16, 76 und/oder 12, 74) anordenbar ist, wobei das Motormodul (14) und, falls vorgesehen, das wenigstens eine Funktionsmodul (16, 76, 12) jeweils eine Modulkennung aufweisen und wobei die Elektronik (46) des Elektronikmoduls (18) derart ausgebildet ist, dass sie die jeweiligen Modulkennungen zur Selbstkonfiguration des Systems (10, 70, 90) ausliest.

2. System (10, 70, 90) nach Anspruch 1, **dadurch gekennzeichnet, dass** die Modulkennungen in dem jeweiligen Modulen (12, 14, 16, 76) elektronisch hinterlegt sind und dass die Modulkennungen über in dem jeweiligen Modul (12, 14, 16, 76) vorgesehene elektrische Leitungen (50, 52) oder kontaktlos über eine Funkerkennung ausgelesen werden.

3. System (10, 70, 90) nach Anspruch 1 oder 2, **dadurch gekennzeichnet, dass** die Elektronik (46) derart ausgebildet ist, dass das Auslesen der Modulkennungen bei der Montage oder mit der ersten Inbetriebnahme des Systems (10, 70, 90) erfolgt und/oder dass das Auslesen der Modulkennungen nach vorgebeben Zeitabständen wiederholt erfolgt.

4. System (10, 70, 90) nach Anspruch 1, 2 oder 3, **dadurch gekennzeichnet, dass** als Funktionsmodul ein Lagegebermodul (16) zur Drehlagenmessung der Motorwelle (26), ein Bremsmodul (76) zur Klemmung der Motorwelle (26), ein Drehmomentenmodul zur Drehmomentmessung der Motorwelle, ein Getriebemodul (12) zur Wandlung der Drehzahl/des Drehmoments der Motorwelle (26) und/oder ein Endmodul (20, 74, 94) mit oder ohne einem die Abtriebswelle des Systems bildenden Wellenabschnitt (32, 72) vorgesehen ist.

5. System (10, 70, 90) nach wenigstens einem der vorhergehenden Ansprüche, **dadurch gekennzeichnet, dass** das Motormodul (14), das Elektronikmodul (18) und/oder, falls vorgesehen, das wenigstens eine Funktionsmodul (16, 76, 12, 74) an den einander zugewandten Stirnseiten komplementär zueinander ausgebildete Anordnungsabschnitte derart aufweist, dass die einzelnen Module entlang der Motorachse (26) in Reihe hintereinander aneinander anordenbar sind.

6. System (10, 70, 90) nach wenigstens einem der vorhergehenden Ansprüche, **dadurch gekennzeichnet, dass** Module (18, 20), die nicht mit der Motorwelle (26) mechanisch drehgekoppelt sind, parallel zur Motorachse (26) neben dem Motormodul (14) oder den mit der Motorwelle (26) mechanisch gekoppelten Funktionsmodulen (12, 16) anordenbar sind.

7. System (10, 70, 90) nach wenigstens einem der vorhergehenden Ansprüche, **dadurch gekennzeichnet, dass** das Motormodul (14), das Elektronikmodul (18) und/oder, falls vorhanden, das wenigstens eine Funktionsmodul Kontaktierungsmittel (52) zur elektrischen Kontaktierung des jeweils benachbarten Moduls aufweisen.

8. System (10, 70, 90) nach wenigstens einem der vorhergehenden Ansprüche, **dadurch gekennzeichnet, dass** ein sich an das Elektronikmodul (18) anschließendes Funktionsmodul und/oder das Motormodul (14) Durch- und/oder Weiterleitungsmittel (50) zur Durch- und/oder Weiterleitung von Modulkennungen, von elektrischen Regel-, Steuer und/oder Überwachungssignalen und/oder von Versorgungsstrom aufweisen.

9. System (10, 70, 90) nach Anspruch 8, **dadurch gekennzeichnet, dass** die Durch- und/oder Weiterleitungsmittel als sich in Längsrichtung des jeweiligen Moduls erstreckende Leiterplatinen (50) ausgebildet sind, die als Kontaktierungsmittel einerends einen Steckerabschnitt (52) und andererends Kontaktstellen zum Einstecken in den Steckerabschnitt (52) der Leiterplatine (50) des jeweils benachbarten Moduls aufweisen.

10. System (10, 70, 90) nach wenigstens einem der vorhergehenden Ansprüche, **dadurch gekennzeichnet, dass** das Motormodul (14), das Elektronikmodul (18) und/oder, falls vorhanden, das wenigstens eine Funktionsmodul jeweils ein Modulgehäuse (54) aufweisen, das aus einem Hohlprofil gebildet ist.

11. System (10, 50, 70) nach wenigstens einem der vorhergehenden Ansprüche, **dadurch gekennzeichnet, dass** die Motorwelle (26) im Motormodul (14) nur mit einem Lager (56) drehbar gelagert angeordnet ist, wobei an der dem Lager (56) abgewandten Stirnseite des Motormoduls (14) ein Funktionsmodul (12, 72) vorgesehen ist, welches einen mit der Motorwelle (26) drehgekoppelten, im Funktionsmodul (12, 72) mittels eines Lagers (80) drehbar gelagerten Wellenabschnitt (28) derart aufweist, dass die Motorwelle (26) und der Wellenabschnitt (28) von dem einen motormodulseitigen Lager (56) und dem funktionsmodulseitigen Lager (80) drehbar gelagert wird.

12. Baukasten für Elektromotorsysteme (10, 50, 70) nach wenigstens einem der vorhergehenden Ansprüche, umfassend Motormodule (14) mit unterschiedliche Leistungen aufweisenden Motoren, Elektronikmodule (18) und Funktionsmodule (12, 16, 76, 74, 20), wobei je nach Anforderungsprofil die einzelnen Module in unterschiedlicher Anzahl zu einem Elektromotorsystem (10, 50, 70) zusammenbaubar sind.
